# EUROPÄISCHE PATENTSCHRIFT

(11) **EP 1 742 308 B1**
(45) Veröffentlichungstag und Bekanntmachung des Hinweises auf die Patenterteilung: **12.03.2008**
(21) Anmeldenummer: 05014533.3
(22) Anmeldetag: 05.07.2005
(51) Int. Cl.: H01S 3/094, H01S 3/063

(54) **Wellenleiter-Laseranordnung**
Waveguide laser assembly
Ensemble de lasers à guide d'ondes

(43) Veröffentlichungstag der Anmeldung: 10.01.2007
(73) Patentinhaber: TRUMPF Laser GmbH + Co. KG, 78713 Schramberg (DE)
(72) Erfinder: Voß, Andreas, 70563 Stuttgart (DE); Kumkar, Malte, 78713 Schramberg (DE)
(74) Vertreter: Kohler Schmid Möbus

(56) Entgegenhaltungen:
- WO-A-95/10869
- US-B1- 6 711 184
- SUDMEYER T ET AL: "High-power femtosecond fiber-feedback optical parametric oscillator based on periodically poled stoichiometric LiTaO3" OPTICS LETTERS OPT. SOC. AMERICA USA, Bd. 29, Nr. 10, 15. Mai 2004 (2004-05-15), Seiten 1111-1113, XP002356950 ISSN: 0146-9592
- ABRAHAM D ET AL: "INTRACAVITY-DIODE-PUMPED ERBIUM DOPED FIBRE LASER" ELECTRONICS LETTERS, IEE STEVENAGE, GB, Bd. 28, Nr. 19, 10. September 1992 (1992-09-10), Seiten 1830-1832, XP000310796 ISSN: 0013-5194
- ERHARD S ET AL: "NOVEL PUMP DESIGN OF YB:YAG THIN DISC LASER FOR OPERATION AT ROOM TEMPERATURE WITH IMPROVED EFFICIENCY" OSA TOPS ON OPTICAL AMPLIFIERS AND THEIR APPLICATIONS, Bd. 26, 1999, Seiten 38-44, XP000980115

## Beschreibung

Die vorliegende Erfindung betrifft eine Laseranordnung mit einem Wellenleiterlaser oder Wellenleiterlaserverstärker.

Die Leistungsskalierung von Festkörperlasern oder Festkörperlaserverstärkern bei Grundmodebetrieb im Laserleistungsbereich von mehreren 100 W wird durch thermische und durch nichtlineare Effekte begrenzt. Die Zerstörfestigkeit des laseraktiven Mediums und anderer optischer Elemente wirkt begrenzend auf die erreichbare optische Leistungsdichte im Resonator oder Verstärker. Außerdem muss die erforderliche Pumpleistung im laseraktiven Medium deponiert werden. Thermische Effekte ergeben sich aus der mit der Anregung verbundenen Erwärmung des laseraktiven Mediums. Um übermäßige Temperaturen zu vermeiden, muss das laseraktive Medium gekühlt werden. Die dadurch entstehenden Temperaturgradienten wirken sich vor allem durch mechanische Spannungen und Verformungen sowie durch Brechungsindexgradienten negativ aus. Nichtlineare Effekte spielen vor allem dann eine Rolle, wenn hohe Strahlungsintensitäten über längere Wegstrecken auftreten.

Innerhalb von Wellenleiterlasern, insbesondere bei Faserlasern, kann der Einfluss der thermooptischen Effekte weitgehend unterdrückt werden. Daher bieten sich Faserlaser für die Laseremission im Grundmode an. Geeignete Strukturen gewährleisten auch im Hochleistungsbetrieb eine stabile Grundmodepropagation über große Weglängen im laseraktiven Medium und eine gute Wärmeabfuhr über die im Verhältnis zum laseraktiven Volumen großen Kühlflächen. Faserlaser erlauben eine im Vergleich zum Grundmoderadius extrem große Länge des laseraktiven Mediums, so dass trotz des kleinen Querschnittes ein relativ großes Verstärkungsvolumen zur Verfügung steht. Diesen Vorteilen stehen Einschränkungen durch das Auftreten von nichtlinearen Effekten (z.B. Brillouin-Streuung) aufgrund des kleinen Strahldurchmessers und der großen optischen Weglänge sowie Nachteile durch die hohen Anforderungen an die Pumplichtquelle(n) gegenüber.

Bei Faserlasern werden zur Leistungssteigerung Doppelkernfasern eingesetzt, die bezüglich des laseraktiven Faserkerns als Large Mode Area (LMA) Fasern ausgebildet sind. Doppelkernfasern erlauben die Verwendung von Multimode-Pumplicht, wobei eine Verringerung der Pumplichtabsorption im Vergleich zum direkten Pumpen in den laseraktiven Kern in Kauf genommen werden muss. Die Verwendung von Multimode-Pumplicht ist eine zwingende Voraussetzung für den praktikablen Einsatz von Faserlasern im Hochleistungsbereich. Der bei LMA-Fasern vergrößerte Querschnitt des laseraktiven Kerns erlaubt sowohl eine höhere Pumplichtabsorption, als auch eine erhöhte Schwelle für nichtlineare Effekte und optische Zerstörung. Allerdings wird die Modenselektion mit gesteigertem Durchmesser des laseraktiven Kerns immer schwieriger. Um einen stabilen, effizienten Grundmodebetrieb zu gewährleisten, kann der Durchmesser des laseraktiven Kerns nicht unbegrenzt gesteigert werden. Wenn zusätzlich ein polarisierter Betrieb mit festgelegter Polarisationsrichtung gefordert wird, so wird der Durchmesser möglicherweise weiter eingeschränkt. Weiterhin ist zu berücksichtigen, dass die Verstärkung im laseraktiven Kern nur schwer durch einen Grundmodestrahl abzusättigen ist, wenn dieser einen Strahlradius aufweist, der deutlich kleiner als der Radius des laseraktiven Kerns ist. Bei mangelhafter Sättigung besteht die Gefahr von verstärkter Rückwirkung oder negativen Effekten durch verstärkte Spontanemission.

Der Leistungsskalierung bei Wellenleiterlasern durch Steigerung der Länge des laseraktiven Mediums sind ebenfalls Grenzen gesetzt, da bei kleinem Strahlquerschnitt und großer Länge des laseraktiven Mediums nichtlineare Effekte auftreten. Somit muss die Länge des laseraktiven Mediums für eine Leistungssteigerung sogar reduziert werden, sobald sich die nichtlinearen Effekte begrenzend auswirken. Dabei wird es bei den bestehenden Pumpkonzepten allerdings immer schwieriger, einen Wellenleiterlaser mit hoher Leistung effizient im Grundmode zu betreiben. Die dafür notwendige hohe Absorption in den kleinen laseraktiven Volumina stellt einerseits hohe Anforderungen an die Pumpquellen und kann andererseits dazu führen, dass die thermische Belastung leistungsbegrenzend wirkt. Um Multimode-Pumplicht zum longitudinalen Pumpen nutzen zu können, werden bei Faserlasern mit Doppelkernfasern Multimode-Pumpkerne eingesetzt. Dabei nimmt die Pumplichtabsorption mit steigendem Flächenverhältnis von Pumpkern zu laseraktivem Kern ab. Um also kurze Fasern mit dem Ziel der Leistungsteigerung effizient im Einfach- oder Doppeldurchgang pumpen zu können, muss das Flächenverhältnis verbessert werden, wobei dann allerdings die Anforderung an die Strahlqualität der Pumpquelle steigt.

Bekannte Hochleistungs-Faserlaser werden mit aufwändig strahlgeformten Laserdiodenarrays hoher Brillanz longitudinal gepumpt. Die Wellenlänge des Pumplichts beträgt üblicherweise 980 oder 915 nm. Mit zunehmender Ausgangsleistung des Faserlasers steigt die erforderliche Brillanz des Pumplichts, wodurch der Aufwand für die Strahlformung der Laserdioden ebenfalls ansteigt und eventuell weitere Maßnahmen zur Brillanzerhöhung erforderlich sind. Hierzu zählen z.B. Polarisationskopplung, Slow-Axis-Kollimation und Wellenlängenmultiplex. Aufgrund der erforderlichen mehrstufigen optischen Transformationen ist der elektrisch-optische Wirkungsgrad dieser Pumplichtquellen mit hoher Brillanz erheblich geringer als der einer einfachen Pumplichtquelle. Gleichzeitig erhöht der benötigte optische Aufwand die Kosten der Pumplichtquellen sehr stark.

Aus US 6,353,499 ist ein Faserlaserverstärker mit einer Verstärkerfaser bekannt, die resonatorintern in einem Faserlaser-Resonator gepumpt wird. Dieser bekannte Faserlaserverstärker betrifft eine Anordnung zur Signalverstärkung aus dem Telekommunikationsbereich und beschreibt einen Single-Mode-Resonator.

US 6 711 184 offenbart einen Scheibenlaser mit einem resonator internen optisch nicht-linearen Kristall Frequenzverdopplung.

Aufgabe der vorliegenden Erfindung ist es, einen Hochleistungs-Wellenleiterlaser bzw. -Wellenleiterlaserverstärker mit einer mittleren Leistung von über 500 W zu entwickeln, bei dem keine aufwändige Strahlformung des Pumplichts notwendig ist und bei dem eine nahezu beugungsbegrenzte Strahlqualität im stabilen Grundmodebetrieb erreicht wird.

Diese Aufgabe wird erfindungsgemäß gelöst durch eine Laseranordnung mit einem Wellenleiterlaser oder Wellenleiterlaserverstärker und mit einem Scheibenlaser als Pumplichtquelle für den Wellenleiterlaser bzw. Wellenleiterlaserverstärker, der innerhalb des Resonators des Scheibenlasers, d.h. innerhalb des Pumplichtresonators, angeordnet ist.

Das resonatorinterne Pumpen eines Wellenleiterlasers in einem Scheibenlaserresonator erlaubt den Einsatz von laseraktiven Medien mit geringer Pumplichtabsorption pro Pumplichtdurchgang im Wellenleiterlaser. Dies bietet eine hohe Flexibilität in der Auslegung des Lasersystems. Bei Faserlasern wird durch kürzere laseraktive Fasern die Schwelle für nichtlineare Effekte herabgesetzt. Außerdem können laseraktive Faserkerne mit geringerem Querschnitt eingesetzt werden, was einen stabilen, linear polarisierten Grundmodebetrieb begünstigt. Weiterhin wird effizientes Pumpen des Wellenleiterlasers oder Wellenleiterlaserverstärkers mit Wellenlängen außerhalb der Absorptionsmaxima möglich (sog. "Wing Pumping"). Dies kann dazu genutzt werden, den Quantendefekt und damit die thermische Belastung des laseraktiven Mediums im Wellenleiterlaser oder -laserverstärker zu reduzieren und unter Umständen den Wirkungsgrad zu erhöhen. Das resonatorinterne Pumpen eines Faserlasers oder -laserverstärkers ermöglicht den Einsatz gering dotierter, kurzer laseraktiver Fasern, die in hoher optischer Qualität mit gängigen Verfahren hergestellt werden können. Mit geringerer laseraktiver Dotierung sind im Allgemeinen eine höhere Quanteneffizienz, d.h. ein hoher Ausnutzungsgrad der absorbierten Pumpphotonen für die Besetzung des oberen Laserniveaus, und geringere Verluste zu erzielen. Somit ist auch der thermische Einfluss auf die Absorption gemindert, was insbesondere für Laser vorteilhaft ist, bei denen aus thermisch besetzten Niveaus gepumpt wird.

Erfindungsgemäß wird in einem Hochleistungs-Scheibenlaser resonatorintern ein laseraktives Medium mit Wellenleiterstruktur für das erzeugte Laserlicht und mit oder auch ohne Wellenleiterstruktur für das Pumplicht angeordnet. Der Scheibenlaser dient als Pumplaser für das laseraktive Medium. Der Scheibenlaser wird dafür bevorzugt mit einem Multimoderesonator bei einer Wellenlänge betrieben, die als Pumpwellenlänge für das laseraktive Medium genutzt wird. Für diese Wellenlänge ist im Multimoderesonator typischerweise kein Auskoppelelement vorgesehen. Das laseraktive Medium des Wellenleiters wird als Grundmode-Verstärker mit einfachem oder doppeltem Durchlauf oder aber mit Hilfe eines Resonators als kontinuierlicher oder gepulster Grundmode-Laser betrieben.

Der Scheibenlaser wird mit einfachen Hochleistungslaserdioden betrieben, die ohne aufwändige und stark verlustbehaftete Maßnahmen zur Brillanzmaximierung auskommen, und verfügt über eine im Vergleich zu typischen "High Brightness"-Hochleistungslaserdioden-Pumpquellen deutlich überlegene Brillanz. Weiterhin ist der Scheibenlaser vorteilhaft aufgrund der hohen Strahlqualität, des hohen Wirkungsgrads, der großen Überhöhung der Leistung im Resonator sowie der günstigen Pumpwellenlänge (1030 nm bei einem Yb:YAG-Scheibenlaserkristall).

Vorzugsweise ist das laseraktive Medium des Wellenleiterlasers oder Wellenleiterlaserverstärkers durch den dotierten Faserkern einer Doppelkernfaser gebildet, deren Pumpkern den dotierten Faserkern umgibt und die Pumpstrahlung des Scheibenlasers führt. Durch das resonatorinterne Pumpen kann bei Doppelkernfasern die Querschnittsfläche des Pumpkerns auch bei kurzen Fasern groß im Vergleich zum laseraktiven Kern gewählt werden. Im Extremfall eines sehr kurzen Pumpkerns kann auf den Wellenleiter für das Pumplicht unter Umständen ganz verzichtet werden. Die laseraktive Faser befindet sich in diesem Fall am besten in einem gewissen Winkel zum Pumplicht angeordnet in einem umhüllenden Medium, durch das das Pumplicht im Freistrahl propagiert.

Das resonatorinterne Pumpen eines Faserlasers bei hoher Pumplichtstrahlqualität erlaubt den Einsatz von Pumpkernen mit geringer numerischer Apertur. Dadurch können beispielsweise massive Quarz-Quarz-Fasern eingesetzt werden, bei denen die Führung des Pumplichts im Pumpkern durch ein niederbrechend dotiertes Quarz-Cladding erfolgt. Dieser Fasertyp weist bessere thermische Eigenschaften auf als solche Fasern, bei denen das Pumplicht durch ein Polymercoating auf dem Pumpkern oder durch eine Mikrostrukturierung außerhalb des Pumpkerns geführt wird.

In einer vorteilhaften Ausführungsform der Erfindung wird das Pumplicht in einem Medium mit annähernd parabolischem radialem Brechungsindexgradienten geführt. Dazu ist vorzugsweise der Pumpkern eines faserförmigen Wellenleiterlasers oder Wellenleiterlaserverstärkers durch eine Gradientindex-(GI)-Faser gebildet, da sie sowohl die Erhaltung der Strahlqualität des Pumplichts beim Durchgang durch die Faser erleichtert als auch die Pumptichtintehsität auf der Strahlachse erhöht. Die Absorption des Pumplichts im Vergleich zu einer konventionellen Stufenindex-Struktur wird deutlich verbessert. Vorzugsweise wird die Länge der Gl-Struktur so gewählt, dass sie einer ganzen Anzahl von optischen Periodenlängen ("pitch") entspricht. In diesem Fall verlässt das Pumplicht die Faser im Wesentlichen unverändert; d.h., die optisch wirksame Länge des Wellenleiters ist gleich null. Auch bei einem Wellenleiterlaser oder Wellenleiterlaserverstärker mit nicht-faserförmigem Pumpkern lässt sich eine Gradientindex-Struktur für das Pumplicht realisieren. In diesem Fall handelt es sich bei dem den Wellenleiter umgebenden Körper um eine Gradientindexlinse.

Vorzugsweise weist der Scheibenlaser als laseraktives Material Yb:YAG oder andere Yb-dotierte Materialen (z.B. Wolframate etc.) auf. Das laseraktive Medium des Wellenleiterlasers oder Wellenleiterlaserverstärkers ist bevorzugt aus Yb-dotiertem Quarzglas (Yb:Silica) oder - bei sehr kurzen Wellenleitern - aus kristallinem Material (z.B. Yb:YAG). Mit Yb:Silica sind Laserwellenlängen von 1060 - 1100 nm, bevorzugt ca. 1080 nm, und mit Yb:YAG Laserwellenlängen von 1040 -1060 nm, bevorzugt ca. 1048 nm, möglich.

Um die Pumplaserstrahlung des Scheibenlasers in das laseraktive Medium des Wellenleiterlasers oder Wellenleiterlaserverstärkers einzukoppeln, ist vorzugsweise ein Fokussierelement, z.B. ein fokussierender Spiegel, im Resonator des Scheibenlasers vorgesehen, das die Pumplaserstrahlung auf die Eintrittsfläche des Wellenleiterlasers oder Wellenleiterverstärkers fokussiert. Prinzipiell besteht auch die Möglichkeit, dass der (geeignet gekrümmte) Scheibenlaserkristall die Fokussierung des Pumplichts übernimmt.

In bevorzugten Ausführungsformen der Erfindung sind der Endspiegel und/oder der Auskoppelspiegel des Wellenleiterlasers in das laseraktive Medium des Wellenleiterlasers integriert. Vorzugsweise ist auch ein Endspiegel des Scheibenlaserresonators in das laseraktive Medium integriert. Dabei können der Endspiegel des Scheibenlasers und der Auskoppelspiegel des Wellenleiterlasers in einem Element zusammenfallen. Die Spiegel sind z.B. als Fiber Bragg Grating oder als dielektrische Beschichtung auf den Endflächen des Wellenleiters ausgeführt. Alternativ können die Spiegel in minimalem Abstand zu den Wellenleiterendflächen, d.h. entweder in optischem Kontakt oder mit sehr geringem Spalt von kleiner als 100 µm auf separaten Trägern realisiert werden (sog. "butt coupling").

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform der erfindungsgemäßen Laseranordnung;
- Fig. 2: eine zweite Ausführungsform der erfindungsgemäßen Laseranordnung;
- Fig. 3: eine dritte Ausführungsform der erfindungsgemäßen Laseranordnung; und
- Fig. 4: eine vierte Ausführungsform der erfindungsgemäßen Laseranordnung.

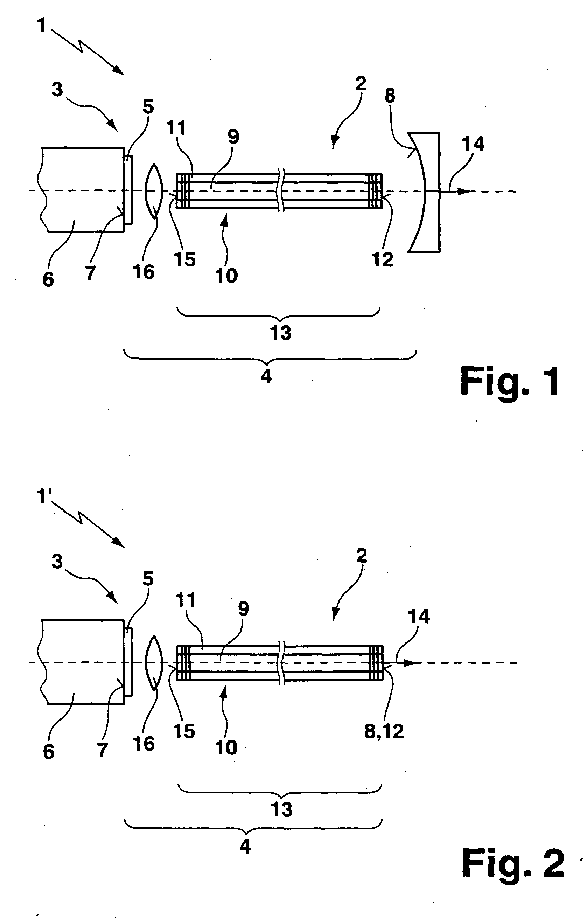

Die in **Fig. 1** gezeigte Laseranordnung **1** umfasst einen zweidimensionalen Wellenleiterlaser in Form eines Faserlasers **2** sowie einen Yb:YAG-Scheibenlaser **3** als Pumplichtquelle für den Faserlaser 2, der innerhalb des Resonators **4** des Scheibenlasers 3 angeordnet ist. Mit dem Yb:YAG-Scheibenlaser 3 sind Pumpwellenlängen von ca. 1010 - 1060 nm möglich, vorteilhaft jedoch eine Pumpwellenlänge von 1030 nm.

Der Scheibenlaser 3 weist als laseraktives Medium eine dünne Kristallscheibe 5 auf, die von der Rückseite flächig über eine Wärmesenke **6** gekühlt und von der Vorderseite mit Diodenlasern (nicht gezeigt) gepumpt wird. Die Rückseite der Kristallscheibe 5 ist verspiegelt und bildet somit den einen Endspiegel 7 des Resonators 4, während der andere Endspiegel **8** durch einen für die Pumpstrahlung des Scheibenlasers 3 hochreflektierenden Spiegel gebildet ist.

Zwischen den beiden Endspiegeln 7, 8 des Scheibenlasers 3 ist das laseraktive Medium **9** des Faserlasers 2 angeordnet. Im gezeigten Ausführungsbeispiel ist das laseraktive Medium 9 durch den dotierten Faserkern einer Doppelkernfaser **10** gebildet, deren Pumpkern **11** den laseraktiven Faserkern 9 umgibt und die Pumpstrahlung des Scheibenlasers 3 führt. Die Pumpstrahlung des Scheibenlasers 3 wird durch die Linse **16** und den Endspiegel 8 auf die Eintrittsflächen der Doppelkernfaser 10 fokussiert, um die Pumplaserstrahlung in die Doppelkernfaser 10 einzukoppeln. Die Pumpstrahlung wird während ihrer Ausbreitung längs des Pumpkerns 11 vom laseraktiven Faserkern 9 absorbiert, wobei die Absorption typischerweise einige Prozent der Pumpstrahlung pro Pumplichtresonatorumlauf beträgt. Der Resonatorrückspiegel (Endspiegel) **15** und der Auskoppelspiegel **12** des Faserlasers 2 sind in die laseraktive Faser 9 in Form von endseitigen Fiber Bragg Gratings integriert. In Fig. 1 ist der Resonator des Faserlasers 2 mit **13** bezeichnet. Der Endspiegel 8 ist für den Laserstrahl **14** des Faserlasers 2 durchlässig.

Bei einem laseraktiven Faserkern 9 aus Yb-dotiertem Quarzglas (Yb:Silica) sind Laserwellenlängen des Faserlasers 2 von 1060 - 1100 nm möglich, wobei eine Laserwellenlänge von ca. 1080 nm bevorzugt ist. Bei einem laseraktiven Faserkern 9 aus Yb:YAG sind Laserwellenlängen des Faserlasers 2 von 1040 - 1060 nm möglich, wobei eine Laserwellenlänge von ca. 1048 nm bevorzugt ist.

Die in Fig. 1 gezeigte Laseranordnung 1 kann in ähnlicher Form auch für einen Faserlaserverstärker eingesetzt werden. In einer solchen Ausführung entfallen die Spiegel 12 und 15. Die im Faserlaserverstärker zu verstärkende Laserstrahlung wird beispielsweise über einen wellenlängenselektiven Umlenkspiegel, der zwischen der Kristallscheibe 5 und dem Faserlaserverstärker angeordnet und für die Pumpstrahlung transparent ist, in den laseraktiven Faserkern 9 eingekoppelt.

Von der Laseranordnung 1 der Fig. 1 unterscheidet sich die in **Fig. 2** gezeigte Laseranordnung **1'** dadurch, dass das rechte Faserende der Doppelkernfaser 10 gleichzeitig als ein für die Pumpstrahlung hochreflektierender Resonatorendspiegel des Scheibenlasers 3 und als ein für die Laserstrahlung des Faserlasers 2 teildurchlässiger Auskoppelspiegel 12 gebildet ist.

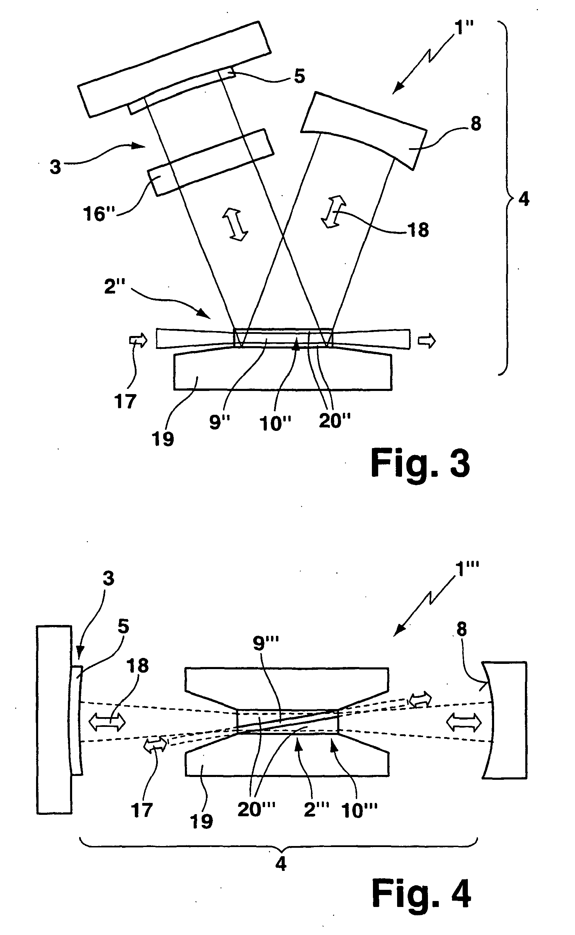

Die in **Fig. 3** dargestellte Laseranordnung **1"** umfasst einen transversal gepumpten eindimensionalen Kristallwellenleiterlaser bzw. -laserverstärker **2"** sowie einen Yb:YAG-Scheibenlaser 3 als Pumplichtquelle für den Wellenleiterlaser oder -laserverstärker 2", der innerhalb des Resonators 4 des Scheibenlasers 3 angeordnet ist. Der Scheibenlaserkristall 5 wird von nicht gezeigten Diodenlasern vorzugsweise mit einem rechteckigen Pumpfleck gepumpt. Der Wellenleiterkristall **10"** des Wellenleiterlasers bzw. -laserverstärker 2" weist eine Sandwich-Struktur auf und umfasst einen scheibenförmigen laseraktiven, vorzugsweise Yb-dotierten, Kern **9"** mit einer Dicke von typischerweise ca. 75 µm und beidseitig angebondete, laserinaktive Deckschichten **20"** mit einer Dicke von typischerweise ca. 15 µm und einem angepassten Brechungsindex, durch die eine eindimensionale Wellenleiterstruktur für das Laserlicht im laseraktiven Kern 9" gebildet wird. Der Wellenleiterkristall 10" ist vorzugsweise länglich mit polierten Seitenflächen ausgebildet, durch die der Grundmodestrahl **17** ein bzw. austritt. Die durch den Scheibenlaser 3 erzeugte Pumpstrahlung **18** wird mit Hilfe einer resonatorinternen Strahlformungsoptik, z.B. einer Zylinderlinse **16",** auf den Wellenleiterlaser oder -laserverstärker 2" fokussiert. Die Ausdehnung des Pumpstrahlungsfelds auf dem Wellenleiterkristall 10" ist typischerweise klein, beispielsweise 0,3 - 0,5 mm in der Breite und ca. 10 - 15 mm in der Länge. Die Unterseite des Wellenleiterlasers oder -laserverstärkers 2" wird durch eine Wärmesenke **19** gekühlt und ist für die Pumpstrahlung 18 hochreflektierend ausgebildet. Der Endspiegel 8 des Scheibenlaserresonators 4 bildet das Pumpstrahlungsfeld zurück auf den Wellenleiterkristall 10" ab. In der in Fig. 3 gezeigten Anordnung 1" ist der Wellenleiter als Laserverstärker für einen von links in den laseraktiven Kern eingekoppelten Laserstrahl 17 gebildet. Mit Hilfe eines im Strahlengang 17 geeignet angeordneten Rück- und Auskoppelspiegels (nicht gezeigt) ergibt sich eine analoge Oszillatoranordnung für einen Wellenleiterlaser. Es besteht insbesondere die Möglichkeit, einen an den asymmetrischen Querschnitt des verstärkenden Volumens im laseraktiven Medium angepassten Hybridresonator (stabil in Richtung des Wellenleiters, instabil in der Ebene der Freistrahlpropagation) zu verwenden, dessen Spiegel ― vollständig oder teilweise ― monolithisch in den Wellenleiter integriert sein können.

In **Fig. 4** ist eine Laseranordnung **1'''** gezeigt, die einen longitudinal von einem Scheibenlaser 3 gepumpten ein- oder zweidimensionalen Wellenleiterlaser **2'''** umfasst, der keine Wellenleiterstruktur für die Pumpstrahlung beinhaltet. In einer Ausführung als eindimensionaler Wellenleiter weist der Wellenleiterkristall **10'''** eine Sandwich-Struktur mit einem scheibenförmigen laseraktiven Medium **9'''** und beidseitig angebondeten, inaktiven Keilplatten **20'''** mit angepasstem Brechungsindex auf. Für eine Ausführung als zweidimensionaler Wellenleiter ist ein rechteckiger dotierter laseraktiver Kern schräg in einen undotierten quaderförmigen Grundkörper mit angepasstem Brechungsindex und einer Dicke von ca. 0,5 mm eingebettet. Der Wellenleiterkristall 10"' ist vorzugsweise länglich (ca. 10 mm lang) und weist polierte Seitenflächen auf, durch die der Grundmodestrahl 17 und die Pumpstrahl 18 ein- bzw. austreten. Die Trennung der beiden Strahlen 17, 18 erfolgt vorzugsweise durch einen gegenüber der Resonatorachse des Scheibenlaserresonators 4 verkippten Strahlengang des Grundmodestrahles 17. Alternativ können auch dichroitische Strahlteiler eingesetzt werden. Der Wellenleiterkristall 10''' ist entweder als Laserverstärker oder in Verbindung mit Resonatorspiegeln (nicht gezeigt) als Oszillator ausgebildet. Der Pumpstrahl 18 hat auf dem Wellenleiterkristall 10''' typischerweise einen Durchmesser von ca. 0,4 mm, was durch eine geeignete Auslegung des Scheibenlaserresonators 4 (ggf. durch eine konkave Form des Scheibenlaserkristalls 5 oder mit Hilfe zusätzlicher fokussierender Elemente) erreicht wird. Zwei gegenüberliegende, große Seitenflächen des Wellenleiterkristalls 10''' werden über Wärmesenken 19 gekühlt.

Bei einem eindimensionalen Wellenleiter 2''' ist wegen der relativ hohen Absorption der Pumpstrahlung im gekippt angeordneten Wellenleiter der Scheibenlaserkristall 5 vorzugsweise als Faltungsspiegel im Resonator 4 des Scheibenlasers angeordnet. Es können auch mehrere Scheibenlaserkristalle in einem gemeinsamen Resonator verwendet werden. Beim eindimensionalen Wellenleiter 2''' ist der laseraktive Kern des Wellenleiters typischerweise recht dünn (ca. 10 - 20 µm) und relativ gering dotiert. Bei einem zweidimensionalen Wellenleiter 2''' ist die Absorption der Pumpstrahlung sehr gering, daher ist der Scheibenlaserkristall 5 vorzugsweise als Endspiegel im Scheibenlaserresonator 4 angeordnet. Ein Mehrfachdurchgang (z.B. mittels Winkelmultiplex) der Pumpstrahlung durch den Wellenleiterkristall 10''' ist günstig. Der zweidimensionale Wellenleiter ist mit relativ großen Abmessungen (z.B. 50 µm x 50 µm Querschnittsfläche) und hoch dotiert ausgeführt. Beim zweidimensionalen Wellenleiter 2''' muss durch geeignete Maßnahmen (z.B. außeraxialer Einbau des Wellenleiters sowie Drehung des Pumplichts pro Resonatorumlauf; Verwendung mehrerer Wellenleiter o.ä.) sichergestellt werden, dass die Absorption möglichst gleichmäßig über den Strahlquerschnitt der Pumpstrahlung 18 erfolgt. Weiterhin tritt beim zweidimensionalen Wellenleiter 2''' eine Phasenfrontstörung des Pumpresonators (Scheibenlaserresonators) 4 durch den Wellenleiter auf, die unter Umständen (bei zu hohen hierdurch bedingten Beugungsverlusten) durch eine spezielle Phasenkorrekturplatte im Resonator ausgeglichen werden muss.

## Patentansprüche

1. Laseranordnung (1; 1'; 1"; 1''') mit einem Wellenleiterlaser oder Wellenleiterlaserverstärker (2; 2"; 2''') und mit einem Scheibenlaser (3) als Pumplichtquelle für den Wellenleiterlaser bzw. Wellenleiterlaserverstärker (2; 2"; 2"), der innerhalb des Resonators (4) des Scheibenlasers (3) angeordnet ist.

2. Laseranordnung nach Anspruch 1, **dadurch gekennzeichnet, das**s der Wellenleiterlaser oder Wellenleiterlaserverstärker (2"; 2''') ohne Wellenleiterstruktur für die vom Scheibenlaser (3) erzeugte Pumpstrahlung (18) ausgebildet ist.

3. Laseranordnung nach Anspruch 2, **dadurch gekennzeichnet, dass** das laseraktive Medium (9"; 9"') des Wellenleiterlasers oder Wellenleiterlaserverstärkers (2"; 2"') in einem Winkel zur Resonatorachse des Scheibenlaserresonators (4) in einem Körper (10"; 10"') angeordnet ist, der einen geringeren Brechungsindex aufweist als das laseraktive Medium.

4. Laseranordnung nach Anspruch 2 oder 3, **dadurch gekennzeichnet, dass** das laseraktive Medium des Wellenleiterlasers oder Wellenleiterlaserverstärkers faserförmig ausgebildet ist.

5. Laseranordnung nach Anspruch 1, **dadurch gekennzeichnet, dass** das laseraktive Medium (9) des Wellenleiterlasers oder Wellenleiterlaserverstärkers (2) durch den dotierten Faserkem einer Doppelkernfaser (10) gebildet ist, deren Pumpkem (11) den dotierten Faserkem umgibt und die Pumpstrahlung des Scheibenlasers (3) führt.

6. Laseranordnung nach einem der vorhergehenden Ansprüche, **dadurch gekennzeichnet, dass** das Pumplicht (18) in einem Medium (11, 20"') mit annähernd parabolischern radialem Brechungsindexgradienten, insbesondere einer Gradientindexlinse oder Gradientindexfaser, geführt wird.

7. Laseranordnung nach einem der vorhergehenden Ansprüche, **dadurch gekennzeichnet, dass** der Scheibenlaser (3) als laseraktives Material Yb:YAG oder andere Yb-dotierte Materialen aufweist.

8. Laseranordnung nach einem der vorhergehenden Ansprüche, **dadurch gekennzeichnet, dass** das laseraktive Medium (9; 9"; 9"') des Wellenleiterlasers oder Wellenleiterlaserverstärkers (2; 2"; 2"') aus Yb-dotiertem Quarzglas oder aus Yb-dotiertem kristallinem Material ist.

9. Laseranordnung nach einem der vorhergehenden Ansprüche, **dadurch gekennzeichnet, dass** der Resonator (4) des Scheibenlasers (3) mindestens ein Fokussierelement (8; 16; 16") aufweist, das die Pumplaserstrahlung des Scheibenlasers (3) in das laseraktive Medium (9; 9"; 9"') des Wellenleiterlasers oder Wellenleiterverstärkers (2; 2"; 2"') einkoppelt.

10. Laseranordnung nach einem der vorhergehenden Ansprüche, **dadurch gekennzeichnet, dass** der Endspiegel (15) und/oder der Auskoppelspiegel (12) des Wellenleiterlasers (2) in das laseraktive Medium (9) integriert sind.

11. Laseranordnung nach einem der vorhergehenden Ansprüche, **dadurch gekennzeichnet, dass** ein Endspiegel (8) des Scheibenlasers (3) in das laseraktive Medium (9) integriert ist und insbesondere mit dem Auskoppelspiegel (12) des Wellenleiterlasers (2) eine Einheit bildet.

## Claims

1. Laser arrangement (1; 1', 1"; 1''') having a waveguide laser or waveguide laser amplifier (2; 2"; 2''') and having a disc laser (3) as a pumping light source for the waveguide laser or waveguide laser amplifier (2; 2"; 2") which is disposed inside the resonator (4) of the disc laser (3).

2. Laser arrangement according to claim 1, **characterised in that** the waveguide laser or waveguide laser amplifier (2"; 2''') is constructed without a waveguide structure for the pumping radiation (18) produced by the disc laser (3).

3. Laser arrangement according to claim 2, **characterised in that** the laser-active medium (9"; 9''') of the waveguide laser or waveguide laser amplifier (2"; 2"') is arranged at an angle to the resonator axis of the disc laser resonator (4) in a body (10"; 10''') having a lower refractive index than that of the laser-active medium.

4. Laser arrangement according to claim 2 or 3, **characterised in that** the laser-active medium of the waveguide laser or waveguide laser amplifier is in fibre form.

5. Laser arrangement according to claim 1, **characterised in that** the laser-active medium (9) of the waveguide laser or waveguide laser amplifier (2) is formed by the doped fibre core of a twin-core fibre (10) the pumping core (11) of which surrounds the doped fibre core and guides the pumping radiation of the disc laser (3).

6. Laser arrangement according to any one of the preceding claims, **characterised in that** the pumping light (18) is guided in a medium (11, 20"') with approximately parabolic radial refractive index gradient, especially a gradient-index lens or gradient-index fibre.

7. Laser arrangement according to any one of the preceding claims, **characterised in that** the disc laser (3) has Yb:YAG or other Yb-doped materials as laser-active material.

8. Laser arrangement according to any one of the preceding claims, **characterised in that** the laser-active medium (9; 9"; 9"') of the waveguide laser or waveguide laser amplifier (2; 2", 2''') is composed of Yb-doped quartz glass or Yb-doped crystalline material.

9. Laser arrangement according to any one of the preceding claims, **characterised in that** the resonator (4) of the disc laser (3) has at least one focusing element (8; 16; 16") which couples the pumping laser radiation of the disc laser (3) into the laser-active medium (9; 9"; 9"') of the waveguide laser or waveguide laser amplifier (2; 2"; 2"').

10. Laser arrangement according to any one of the preceding claims, **characterised in that** the end mirror (15) and/or the output mirror (12) of the waveguide laser (2) is/are integrated in the laser-active medium (9).

11. Laser arrangement according to any one of the preceding claims, **characterised in that** an end mirror (8) of the disc laser (3) is integrated in the laser-active medium (9) and, especially, forms a unit with the output mirror (12) of the waveguide laser (2).

## Revendications

1. Dispositif laser (1 ; 1'; 1"; 1"') comprenant un laser à guide d'ondes ou un amplificateur laser à guide d'ondes (2 ; 2" ; 2"') et un laser à disque (3) comme source de lumière de pompage pour le laser à guide d'ondes ou l'amplificateur laser à guide d'ondes (2 ; 2" ; 2"), qui est disposé à l'intérieur du résonateur (4) du laser à disque (3).

2. Dispositif laser selon la revendication 1, **caractérisé en ce que** le laser à guide d'ondes ou l'amplificateur laser à guide d'ondes (2" ; 2"') est réalisé sans structure de guide d'ondes pour le rayonnement de pompage (18) généré par le laser à disque (3).

3. Dispositif laser selon la revendication 2, **caractérisé en ce que** le milieu actif (9" ; 9"') du laser à guide d'ondes ou de l'amplificateur laser à guide d'ondes (2" ; 2''') est disposé à un angle par rapport à l'axe de résonateur du résonateur de laser à disque (4) dans un corps (10"; 10"') qui présente un indice de réfraction plus faible que le milieu actif laser.

4. Dispositif laser selon la revendication 2 ou 3, **caractérisé en ce que** le milieu actif du laser à guide d'ondes ou de l'amplificateur laser à guide d'ondes est réalisé sous forme de fibre.

5. Dispositif laser selon la revendication 1, **caractérisé en ce que** le milieu actif (9) du laser à guide d'ondes ou de l'amplificateur laser à guide d'ondes (2) est formé par le coeur de fibre dopé d'une fibre double coeur (10) dont le coeur de pompage (11) entoure le coeur de fibre dopé et conduit le rayonnement de pompage du laser à disque (3).

6. Dispositif laser selon l'une des revendications précédentes, **caractérisé en ce que** la lumière de pompage (18) est guidée dans un milieu (11, 20"') présentant un gradient d'indice de réfraction radial approximativement parabolique, en particulier une lentille à gradient d'indice ou une fibre à gradient d'indice.

7. Dispositif laser selon l'une des revendications précédentes, **caractérisé en ce que** le laser à disque (3) présente Yb:YAG ou d'autres matériaux dopés Yb comme matériau actif.

8. Dispositif laser selon l'une des revendications précédentes, **caractérisé en ce que** le milieu actif (9; 9" ; 9"') du laser à guide d'ondes ou de l'amplificateur laser à guide d'ondes (2 ; 2"; 2"') est en verre de quartz dopé Yb ou en matériau cristallin dopé Yb.

9. Dispositif laser selon l'une des revendications précédentes, **caractérisé en ce que** le résonateur (4) du laser à disque (3) présente au moins un élément focalisant (8 ; 16 ; 16") qui couple le rayonnement de laser de pompage du laser à disque (3) dans le milieu actif (9 ; 9" ; 9''') du laser à guide d'ondes ou de l'amplificateur à guide d'ondes (2 ; 2" ; 2''').

10. Dispositif laser selon l'une des revendications précédentes, **caractérisé en ce que** le miroir d'extrémité (15) et/ou le miroir de sortie (12) du laser à guide d'ondes (2) sont intégrés dans le milieu actif (9).

11. Dispositif laser selon l'une des revendications précédentes, **caractérisé en ce qu'**un miroir d'extrémité (8) du laser à disque (3) est intégré dans le milieu actif (9) et forme, en particulier, une unité avec le miroir de sortie (12) du laser à guide d'ondes (2).
